# EUROPEAN PATENT APPLICATION

(11) **EP 2 080 944 A1**
(43) Date of publication of application: **22.07.2009**
(21) Application number: 08250191.7
(22) Date of filing: 15.01.2008
(51) Int. Cl.: F16L 3/22

(54) **Tube assembly for receiving optical fibre cables and retaining device for forming tube assemblies**

(71) Applicant: Emtelle UK Limited, Hawick Scotland TD9 8LF (GB)
(72) Inventor: The designation of the inventor has not yet been filed
(74) Representative: Vinsome, Rex Martin

(57) **Abstract**

A retaining device (52) for retaining a plurality of tubes (54) adapted to receive optical fibre cables is disclosed. The retaining device (52) has a support (58) that joins together several clips (56). Each clip (56) resiliently receives a tube (54) or bundle of tubes (54) and releasably retain the tube or bundle of tubes. The retaining device (52) is injection moulded and in use several retaining device (52) are spread equidistantly along the length of several tubes (54) to form a tube assembly.

## Description

The present invention relates to a tube assembly for receiving one or more optical fibre cables and to a device for retaining a plurality of tubes used in forming such a cable. The invention also relates to a method of forming such an assembly.

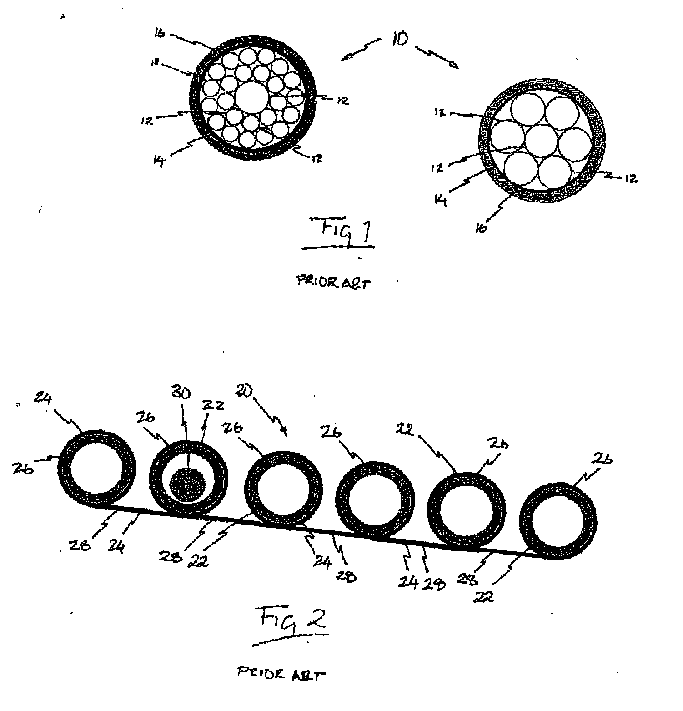

The use of optical fibres to carry data and telephone signals is well known. The fibres are often grouped together into cables and cables protected within tubes. Furthermore, tubes are often bundled together to form tube assemblies. Examples of two such tube assemblies are shown in Figure 1. The tube assemblies 10 contain a plurality of tubes 12 formed by extrusion that receive optical fibre cables and are held together by one or more protective layers 14 and 16, which are themselves extruded over the group of tubes.

Such bundles provide a space efficient means for holding large numbers of optical fibre cables together, whilst providing sufficient space for the cables to be inserted, typically by blowing. However, in order that individual tubes 12 can be separated from the tube assembly 10 it is necessary to cut the outer protective layers, 14 and 16, of the assembly. This risks damaging the tubes 12 and even once the outer protective layers 14 and 16 have been out it can be difficult to extract the correct tube 12.

A development from these tube assemblies is shown in Figure 2 in which a tube assembly 20 contains tubes 22, which are equivalent to the tubes 12 in Figure 1. The tubes 22, which have been extruded in a continuous production process to any desired length, are encapsulated in an outer layer 24 which is also formed by extrusion. Although formed as a single extruded article the outer layer 24 can be regarded as an encapsulating layer 26 around each of the tubes 22 and adjacent encapsulating layers are connected to each other by connecting webs 28 to produce a flat cable of tubes having a thickness roughly one tube thick and known to persons skilled in the art as a "flatliner". A tube assembly of this type has the advantage that each cable can be easily accessed since it will not be buried under other tubes as seen in the tube assemblies of Figure 1. However, the encapsulating layer 26 still has to be removed from the tube 22 in order that a pneumatic connector can be attached to tube 22 as part of the process of blowing an optical fibre, or bundle of optical fibres indicated at 30 on Figure 2, through the tube 22. Since these tube assemblies are often installed in small spaces in ceilings or floors access to the tube assemblies can be difficult and poorly lit making the process of cutting the encapsulating layer 26 more difficult and increasing the likelihood of damaging or puncturing the tube 22.

Preferred embodiments of the present invention seek to overcome the above disadvantages of the prior art.

According to an aspect of the present invention there is provided a retaining device for retaining a plurality of tubes adapted to receive respective optical fibre cables, the device comprising:-
(a) a support; and
(b) a plurality of clips mounted to said support, wherein each clip is adapted to (i) resiliently receive a plurality of tubes or bundles of tubes, each said tube being adapted to receive a respective optical fibre cable and (ii) releasably retain said tubes or bundles of tubes substantially in a plane.

By providing a device with a plurality of clips to releasably retain a tube for an optical fibre cable, the advantage is provided that tubes can be easily inserted into the clips and removed from the clips without the need to cut an encapsulating layer as seen in the prior art. As a result, damage to the tubes is less likely and access to the tubes is significantly easier. Furthermore, by arranging the tubes or bundles of tubes substantially in a plane, this provides the further advantage that the tubes or bundles of tubes can be easily wound onto a drum, even when mounted to the clips. The arrangement of the tubes or bundles of tubes substantially in a plane also assists identification of the individual tubes or bundles of tubes.

In a preferred embodiment the device is formed by injection moulding.

By injection moulding the device, the advantage is provided that significantly less plastic material is used than in the prior art. It is normally the case that to form an article by injection moulding is more expensive than is the case for an extruded product because injection moulding is a batch rather than a continuous process. However, because the device of the present invention does not need to extend along the entire lengths of the tubes, as is the case with the encapsulating layer (26) of the prior art of fig.2, an injection moulded product can be produced and spaced apart along the length of the tube. This has the benefit of reducing the material content and the cost of the assembly. Furthermore, it would also be counterintuitive for a person skilled in the art to include an injection moulding process and article handling process into the formation of a tube bundle since this is two steps that could be achieved by the single step of extruding as seen in the prior art. However, because of the significant saving in plastic material by producing clips and spacing them apart along the length of the tube, these additional steps can be justified and the overall production cost of a tube assembly using the retaining device of the present invention is surprisingly less than in the prior art.

In another preferred embodiment the retaining clip further comprises a part circle shaped body portion, wherein a gap in said part circle allows said tubes or tube bundles to be released from said clip and ends of said part circle resiliently receive said tubes or tube bundles.

In a further preferred embodiment the device has a substantially constant cross-section in an axial directions along a tube installed on said device.

In a preferred embodiment a plurality of the clips are offset relative to each other in an axial direction along a tube installed on the device.

By offsetting or staggering the adjacent clips the advantage is provided that when the tubes are installed in such a clip, adjacent tubes can be touching or very nearly touching since the thickness of the material forming the clips and radial movement of clips does not impinge on the clip immediately adjacent to it.

According to another aspect of the present invention there is provided a tube assembly for receiving one or more optical fibre cables, the assembly comprising:-
a retaining device as defined above; and
at least one tube or bundle of tubes, the or each tube being adapted to receive a respective optical fibre cable, wherein the or each tube or bundle of tubes is received in a respective clip.

In a preferred embodiment the tube assembly comprises a plurality of retaining devices at intervals along the length of the or each tube or bundle of tubes.

According to a further aspect of the present invention, there is provided a method of forming an optical fibre bundle comprising the steps of attaching at least one retaining device as defined above to at least one tube or bundle of tubes, the or each tube being adapted to receive a respective optical fibre cable, at intervals along the length of the or each tube.

The method may further comprise temporarily attaching a plurality of said devices to a mounting wheel at intervals around the circumference of the wheel and mounting the devices to said tubes or bundles of tubes as said wheel rotates relative to said tubes or bundles of tubes.

By using a wheel to temporarily hold the devices, the advantage is provided that the devices can be equally spaced along the length of the tubes.

In another preferred embodiment the device is attached to said wheel using suction.

By using suction to temporarily hold the retaining devices, the advantage is provided that the process of holding and releasing the devices is simple and automatic since the tubes are received into the retaining clips by pressing against the wheel but the resilient force that holds the tubes into the retaining clips easily overcomes the suction force holding the retaining clip to the wheel.

Preferred embodiments of the present invention will now be described, by way of example only, and not in any limitative sense with reference to the accompanying drawings in which:-
Figure 1 is a sectional view of two examples of tube assemblies of the prior art;
Figure 2 is a sectional view of a further tube assembly of the prior art;
Figure 3 and 4 are a sectional view through a tube assembly including a retaining device of the present invention; and
Figure 5 is a side view of a component of an apparatus for forming a tube assembly of the present invention.

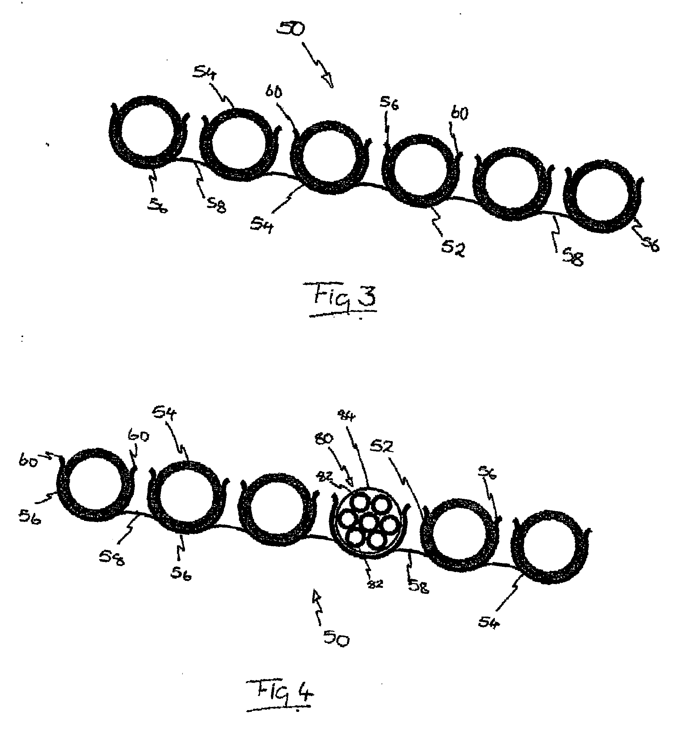

Referring to Figures 3 and 4, a tube assembly 50 is formed from a retaining device 52 and six tubes 54 that are designed to receive optical fibre cables or optical fibres (not shown). The tubes 54 are of the type known to persons skilled in the art and do not in themselves form part of the present invention. The retaining device 52 is formed from six retaining clips 56, one for each tube 54. The clips 56 are arranged in a line and a support in the form of web members 58 connect neighbouring pairs of clips 56. Each clip 56 is part-circle shaped in cross-section and has guide portions 60 extending outwards from each end of the part-circle of each clip 56.

The gap between the two guide portions 60 at the end of the part curved shape clip 56 allows the tube 54 to be pressed into engagement with the clip 56. The part circle covers approximately two thirds of the circumference of the tube 54 so that the gap between the inside edges of the ends of the part-circle are less than the outer diameter of tube 54. As a result the clip 56 must move apart slightly in order to receive a tube 54 but resiliently springs back so that the distance between the innermost surfaces of the guide portion 60 are less than the diameter of a tube 54 thereby holding it in place within the clip 56. The length of each retaining device 52, as measured axially along tube 54, is significantly less than the length of the tube. Typically the length is between one third and three times the diameter of the tube. However, other lengths may also be acceptable.

In order to form the tube assembly 50, a tube 54 is introduced into each clip 56 on retaining device 52. As the tube is pressed into engagement with clip 56 the guide portion 60 moves slightly apart in order to accommodate the full diameter of the tube 54 before resiliently springing back towards each other as the tube comes into engagement with the rest of the inner surface of clip 56. Thus the tube is pressed into the gap between guide portions 60 and snaps into engagement with the clip 56 where it is retained.

When in use the tube assembly can be unrolled from a long roll and put into place and as individual tubes 54 are required to be split from the assembly they can be simply unclipped from the retaining device 52 cut to the required length and the tube 54 is ready to be joined to a pneumatic connector, The web portions 58 can be used to fix a tube assembly into position by using a nail or screw passing through the web.

In order to manufacture a tube assembly of the present invention, retaining devices are formed by injection moulding. By producing a retaining device 52 with a constant cross-section, axially along the tube to which it will be connected, the retaining device can be produced in an inexpensive two-part injection moulding tool. By using a multi-impression tool many retaining devices can be produced at one time. For example, by using a tool that can produce twenty retaining devices and having a twenty second cycle time sixty retaining devices can be produced per minute.

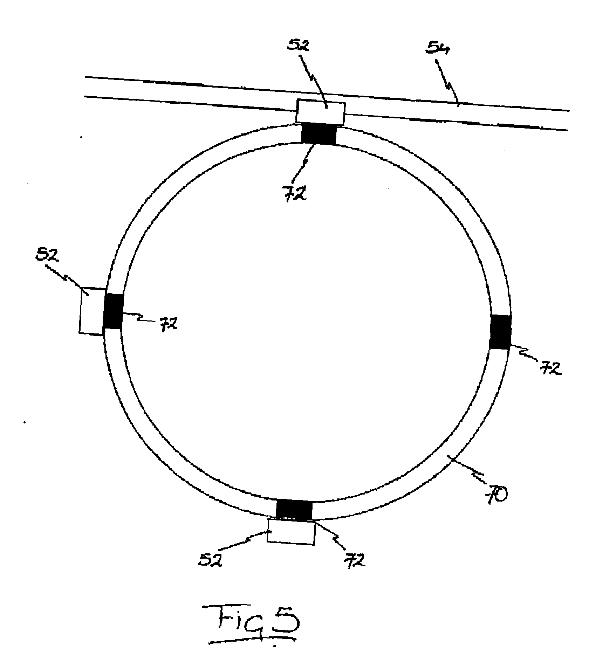

The output of the injection moulding machine is directed to a vibratory bowl feeder (of the type produced by Podmores Limited of Stoke-on-Trent in the UK, which is able to select individual retaining devices and place them on the outside of a wheel 70, shown in Figure 5. The wheel 70 has four receiving locations 72 spaced, ideally, evenly around its circumference. Each receiving portion has a suction device, which is ideally fed from a central vacuum forming location that retains a receiving device 52 in engagement with an outer surface of receiving location 72. The tubes 54 are aligned next to each other with their axes perpendicular to the axis of wheel 70. As each receiving location 72, with a retaining device 52 connected thereto, reaches the uppermost point in the rotation of wheel 70 the tubes 54 engage the retaining device 52 so that the tubes are pushed into the clips 56.

Once the clips 56 are engaged with the tubes 54, the force required to remove the retaining devices 52 from engagement with the tubes is quite large. In particular, it is greater than the suction force holding the retaining device in engagement with the receiving location 72. As a result, as wheel 70 turns, retaining device 52 remains in engagement with the tubes 54 and is released from the receiving 72. As wheel 70 turns a quarter circle a length of tubes 54 equal to a quarter of the circumference of wheel 70 passes over the wheel and the next retaining device 52 that is attached to receiving location 72 is brought into engagement with the tubes 54. As this process continues a tube assembly 50 is formed with tubes 54 held together by a plurality of retaining devices 52 separated by a distance of a quarter of the outer circumference of wheel 70.

It will be appreciated by persons skilled in the art that the above embodiment has been described by way of example only, and not in any limitative sense, and that various alterations and modifications are possible without departure from the scope of the invention as defined by the appended claims. For example, the tube assembly 50 could be formed from more or less tubes 54 than the six shown in the above example. Furthermore, there could be more or less receiving portions 72 on wheel 70 and by varying the number of receiving locations and/or diameter of the wheel, the spacing of the retaining devices 52 can be varied. The tubes 54 could be replaced by tube bundles 60 that contain small tubes 82 surrounded by a protective tube 84 and indeed the protective tube 84 need not be present if the smaller tubes 82 are joined together, for example by an adhesive. The support, disclosed above in the form of web members 58, could be various other shapes and located in different positions. For example, the web members 58 could be located half way up the clips 56 where the distance between the clips is at its smallest. Alternatively the support could be formed as a shape (rather than the line shown in figures 3 and 4) forming a short tube. For example, the support could be a circular tube with the clips 56 located around the outside. In a further alternative the clips could be arranged in two rows with adjacent clips offset or staggered so as to allow the tubes installed in the clip to be placed closer together, even to the point where they are touching, than shown in Figure 3 and 4.

## Claims

1. A retaining device for retaining a plurality of tubes adapted to receive respective optical fibre cables, the device comprising:-
(a) a support; and
(b) a plurality of clips mounted to said support, wherein each clip is adapted to (i) resiliently receive a plurality of tubes or bundles of tubes, each said tube being adapted to receive a respective optical fibre cable and (ii) releasably retain said tubes or bundles of tubes substantially in a plane.

2. A device according to claim 1, wherein said device is formed by injection moulding.

3. A device according to claim 1 or 2, wherein said retaining clip further comprises a part circle shaped body portion, wherein a gap in said part circle allows said tubes or tube bundles to be released from said clip and ends of said part circle resiliently receive said tubes or tube bundles.

4. A device according to any one of the preceding claims, wherein said device has a substantially constant cross-section in an axial directions along a tube installed on said device.

5. A device according to any one of the preceding claims, wherein a plurality of said clips are offset relative to each other in an axial direction along a tube installed on said device.

6. A tube assembly for receiving one or more optical fibre cables, the assembly comprising:-
a retaining device according to any one of the preceding claims; and
at least one tube or bundle of tubes, the or each tube being adapted to receive a respective optical fibre cable, wherein the or each tube or bundle of tubes is received in a respective clip.

7. A tube assembly according to claim 6, wherein said tube assembly comprises a plurality of retaining devices at intervals along the length of the or each tube or bundle of tubes.

8. A method of forming an optical fibre bundle comprising the steps of attaching at least one device according to any one of the preceding claims to at least one tube or bundle of tubes, the or each tube being adapted to receive a respective optical fibre cable, at intervals along the length of the or each tube.

9. A method according to claim 8, further comprising temporarily attaching a plurality of said devices to a mounting wheel at intervals around the circumference of the wheel and mounting the devices to said tubes or bundles of tubes as said wheel rotates relative to said tubes or bundles of tubes.

10. A method according to claim 8 or 9, wherein said device is attached to said wheel using suction.
